# EUROPEAN PATENT SPECIFICATION

(11) **EP 2 391 061 B1**
(45) Date of publication and mention of the grant of the patent: **29.11.2017**
(21) Application number: 10743397.1
(22) Date of filing: 20.01.2010
(51) Int. Cl.: H04L 12/24, H04L 12/46, H04L 12/26

(54) **METHOD, APPARATUS AND SYSTEM FOR CONFIGURING MASTER-SLAVE NETWORK DEVICES**
VERFAHREN, VORRICHTUNG UND SYSTEM ZUR KONFIGURIERUNG VON MASTER-SLAVE-NETZWERKGERÄTEN
PROCÉDÉ, APPAREIL ET SYSTÈME POUR CONFIGURER DES DISPOSITIFS DE RÉSEAU MAÎTRES-ESCLAVES

(30) Priority: 20.02.2009 CN 200910078406
(43) Date of publication of application: 30.11.2011
(73) Proprietor: Huawei Technologies Co., Ltd., Longgang District Shenzhen, Guangdong 518129 (CN)
(72) Inventor: YIN, Xianyang, Shenzhen Guangdong 518129 (CN); CAO, Qingbo, Shenzhen Guangdong 518129 (CN)
(74) Representative: Thun, Clemens
(86) International application number: PCT/CN2010/070280
(87) International publication number: WO 2010/094216

(56) References cited:
- CN-A- 1 996 880
- CN-A- 101 170 418
- CN-A- 101 350 823
- CN-A- 101 494 560
- US-A1- 2002 133 631
- US-A1- 2002 133 631
- US-A1- 2007 240 213

## Description

### FIELD OF THE INVENTION

The present invention relates to network communications technologies, and in particular, to a method, an apparatus and a system for configuring master and slave network devices.

### BACKGROUND OF THE INVENTION

In a network device based on a master-slave mechanism, the master network device uses the local clock to send data, and the slave network device uses the clock recovered to send data.

The existing method for configuring master and slave network devices is: According to the state of network clock (such as the level of Ethernet Synchronization Status Message (ESSM)), the master-slave state configuration information of the network devices on both ends is set, and then the network devices on both ends performs PHY (physical) layer auto-negotiation. If the master-slave state configuration information of the network devices on both ends is set to manual-Master (manually configured-Master) or manual-Slave (manually configured-Slave), the auto-negotiation fails, and the ports of the network devices on both ends are in the down state and need to be reconfigured. If the master-slave state configuration information of the network device on one end is set to manual-Master, and the master-slave state configuration information of the network device on the other end is set to manual-slave, the auto-negotiation succeeds, the network device set to manual-master is a master network device, and the network device set to manual-slave is a slave network device. The ports of the network devices on both ends are in the up state, and the network devices on both ends can communicate normally.

In the process of implementing the present invention, the inventors find that: In the foregoing configuration method, when the auto-negotiation fails, the network devices on both ends need to be reconfigured. In order to avoid repeated configuration operations, upper-layer information interaction needs to be performed so that the network devices on both ends know the master-slave state configuration information that should be set, which increases the complexity and overhead configuration of the master and slave network devices. Besides, in the normal communication process, when the current master-slave state configuration information of the network device on one end changes, the foregoing configuration method leads to that the master network device and the slave network device fail to switch. For example, for network device A and network device B, the current master-slave state configuration information of network device A is manual-Master, and the current master-slave state configuration information of network device B is manual-Slave. When the current master-slave state configuration information of network device B changes from manual-Slave to manual-Master, because the current master-slave state configuration information of network device A is still manual-Master, the physical-layer auto-negotiation fails, the ports of the network devices on both ends are in the down state, and the master network device and the slave network device fail to switch. Therefore, the foregoing master-slave network device configuration method affects the maintainability of the network device.

US 20020133631 A1 describes an auto-negotiation (AN) method for establishing a high speed link between first and second transmitting devices in a gigabit Ethernet using the 1000 Base-t standard includes transmitting and receiving a base page indicating a transmission capability between the first and second transmitting devices. A message page is transmitted and received that indicates a 1000 Mbps transmission capability between the first and second transmitting devices and a specific state. A first unformatted page is transmitted and received that indicates transmitting speeds and modes, and port types of the first and second transmitting devices. A null page is transmitted and received after the first unformatted page, upon determining a master and slave from among the first and second transmitting devices based upon the first unformatted page. A high speed link is established between the first and second transmitting devices and the AN method is terminated.

### SUMMARY OF THE INVENTION

The embodiments of the present invention provide a method, an apparatus, and a system for configuring master and slave network devices to avoid reconfiguration of the master-slave state configuration information of the network devices on both ends, avoid the upper-layer information interaction process after failure in physical-layer auto-negotiation, avoid a phenomena that the master network device and the slave network device fail to switch, and improve maintainability of the network device.

A method for configuring master and slave network devices, wherein the master network device uses a local clock to send data and the slave network device uses the clock recovered to send data and the master and slave devices both support synchronous Ethernet, in an embodiment of the present invention includes:
receiving, by a network device, master-slave state configuration information indicating that the network device is set to manual-Master or manual-Slave;
judging, by the network device, if a current state of a port of the network device is down or up and/or whether the received master-slave state configuration information is the same as current master-slave state configuration information of the network device after receiving the master-slave state configuration information;
and in case of judging whether the port of the network device is down or up, if the current state of the port is down, performing a first physical-layer auto-negotiation according to the received master-slave state configuration information, and setting a master-slave state configuration mode of the network device to an automatic mode, but performing no physical-layer auto-negotiation for the automatic mode setting;
and in case of judging whether the received master-slave state configuration information is the same as current master-slave state configuration of the network device, if the received master-slave state configuration information is different from the current master-slave state configuration information of the network device, performing the first physical-layer auto-negotiation according to the received master-slave state configuration information, and setting the master-slave state configuration mode of the network device to the automatic mode but performing no physical-layer auto-negotiation for the automatic mode setting.

An apparatus for configuring master and slave network devices, wherein the apparatus is a network device that supports a synchronous Ethernet, or is set in the network device that supports the synchronous Ethernet and the master network device uses a local clock to send data and the slave network device uses the clock recovered to send data, the apparatus in an embodiment of the present invention includes:
a receiving unit, configured to receive master-slave state configuration information indicating that the network device is set to manual-Master or manual-Slave; and
a configuring unit, configured to perform physical-layer auto-negotiation according to the master-slave state configuration information received by the receiving unit, and set a master-slave state configuration mode of a network device to an automatic mode and perform no physical-layer auto-negotiation for the setting of the automatic mode, wherein the configuring unit comprises:
   a judging module, configured to judge current state of a port of the network device is down or up and/or whether the received master-slave state configuration information is the same as current master-slave state configuration information of the network device after the receiving unit receives the master-slave state configuration information; and

a configuring module, configured to perform the first physical-layer auto-negotiation according to the master-slave state configuration information received by the receiving unit if a judgment result of the judging module is that the current state of the port is down and/or that the received master-slave state configuration information is different from the current master-slave state configuration information of the network device; and set the master-slave state configuration mode of the network device to the automatic mode but perform no physical-layer auto-negotiation for the automatic mode setting.

A system for configuring master and slave network devices, wherein the master network device uses a local clock to send data and the slave network device uses the clock recovered to send data and the master and slave devices both support synchronous Ethernet, in an embodiment of the present invention includes:
a first network device, configured to perform physical-layer auto-negotiation according to received master-slave state configuration information indicating that the first network device is set to manual-Master or manual-Slave after receiving the master-slave state configuration information, and set a master-slave state configuration mode of the first network device to an automatic mode and perform no physical-layer auto-negotiation for the setting of the automatic mode; and
   a second network device, configured to perform the physical-layer auto-negotiation with the first network device after the first network device initiates the physical-layer auto-negotiation, wherein:
   the first network device is further configured to judge current state of a port of the first network device is down or up and/or whether the received master-slave state configuration information is the same as current master-slave state configuration information of the network device after receiving the master-slave state configuration information; perform the physical-layer auto-negotiation according to the received master-slave state configuration information if a judgment result is that the current state of the port is down and/or that the received master-slave state configuration information is different from the current master-slave state configuration information of the first network device; and set the master-slave state configuration mode of the first network device to the automatic mode but perform no physical-layer auto-negotiation for the automatic mode setting.

It can be seen from the foregoing technical solution that: After receiving the master-slave state configuration information, a network device sets the master-slave state configuration mode of the network device to an automatic mode and performing no physical-layer auto-negotiation with a peer end network device. Therefore, the next physical-layer auto-negotiation between the network devices on both ends can succeed without upper-layer information interaction. Moreover, if the physical-layer auto-negotiation for the received master-slave state configuration information fails, only the network device on either end needs to configure the master-slave state configuration information, that is the physical-layer auto-negotiation between the network devices on both ends can succeed, thereby reconfiguration of the master-slave state configuration information on the network devices on both ends and the upper-layer information interaction process after failure in the physical-layer auto-negotiation, and the phenomena that the master network device and the slave network device fail to switch can be avoided, and maintainability of the network devices can be improved.

### BRIEF DESCRIPTION OF THE DRAWINGS

FIG. 1 is a flow chart of a method for configuring master and slave network devices according to Embodiment 1 of the present invention;
FIG. 2 is a flow chart of a method for configuring master and slave network devices according to Embodiment 2 of the present invention;
FIG. 3 is a flow chart of a method for configuring master and slave network devices according to Embodiment 3 of the present invention;
FIG. 4 shows an apparatus for configuring master and slave network devices according to Embodiment 4 of the present invention;
FIG. 5 shows network devices according to Embodiment 5 of the present invention; and
FIG. 6 shows a system for configuring master and slave network devices according to Embodiment 6 of the present invention.

### DETAILED DESCRIPTION OF THE EMBODIMENTS

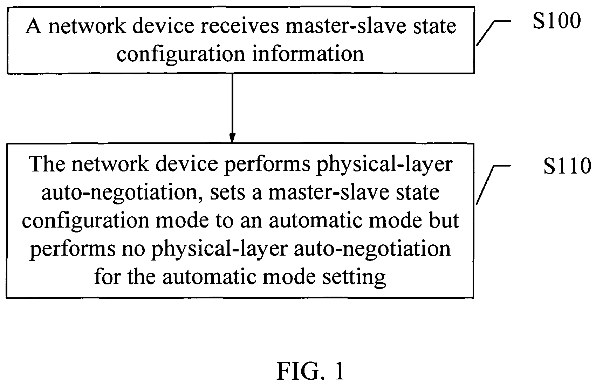

Embodiment 1 provides a method for configuring master and slave network devices. A flow chart of the method is shown in FIG. 1.

In FIG. 1, as S100, a network device receives master-slave state configuration information.

The network device may be a network device that supports the synchronous Ethernet, for example, the network device may be a network device that includes a 1000BASE-T PHY chip. The master-slave state configuration information indicates that the network device is set to manual-Master or manual-Slave.

S110. The network device performs physical-layer auto-negotiation with a peer end network device according to the received master-slave state configuration information, and sets a master-slave state configuration mode of the network device to an automatic mode.

In the prior art, if the master-slave state configuration mode is set to the automatic mode, the network devices on both ends perform physical-layer auto-negotiation for the setting of the automatic mode. In this embodiment, the network devices on both ends perform no physical-layer auto-negotiation for the setting of the automatic mode.

In S110, the network device does not perform operations, such as physical-layer auto-negotiation, and automatic mode setting, directly after receiving the master-slave state configuration information, but judges the current state of a port of the network device and/or judges whether received master-slave state configuration information is the same as the current master-slave state configuration information, and then determines whether to perform operations, such as the physical-layer auto-negotiation, and automatic mode setting, according to a judgment result. Of course, the network device may not judge the current state of the port of the network device and/or judge whether received master-slave state configuration information is the same as the current master-slave state configuration information after receiving the master-slave state configuration information, but directly performs operations, such as physical-layer auto-negotiation, and automatic mode setting.

In the case that the network device needs to judge the current state of the port of the network device and/or judge whether the received master-slave state configuration information is the same as the current master-slave state configuration information, an example of S110 is as follows:
The network device judges whether the current state of the port is down or up. If judging that the current state of the port is down, the network device performs physical-layer auto-negotiation with the peer end network device according to the received master-slave state configuration information, and sets the master-slave state configuration mode of the network device to the automatic mode. Moreover, the network devices on both ends perform no physical-layer auto-negotiation for the setting of the automatic mode.

If judging that the current state of the port is up, the network device judges whether the received master-slave state configuration information is the same as the current master-slave state configuration information. If the received master-slave state configuration information is not the same as the current master-slave state configuration information, the network device performs physical-layer auto-negotiation with the peer end network device according to the received master-slave state configuration information, and sets the master-slave state configuration mode of the network device to the automatic mode. Moreover, the network devices on both ends perform no physical-layer auto-negotiation for the setting of the automatic mode. If the network device judges that the received master-slave state configuration information is the same as the current master-slave state configuration information, the network device does not perform operations, such as the physical-layer auto-negotiation, and the automatic mode setting.

It can be seen from the above example of S 110 that, in the case that the port current state of the network device is down, the network device performs physical-layer auto-negotiation with the peer end network device according to the received master-slave state configuration information and sets the master-slave state configuration mode of the network device to the automatic mode no matter whether the active-slave state configuration information received by the network device is the same as the current master-slave state configuration information. Moreover, the network devices on both ends perform no physical-layer auto-negotiation for the automatic mode setting.

It should be noted that in the above example of S110, whether the master-slave state configuration information received by the network device is the same as the current master-slave state configuration information may be judged first, and then the current state of the port is judged. Accordingly, the above example of S110 may alter to:
The network device judges whether the received master-slave state configuration information is the same as the current master-slave state configuration information. If the received master-slave state configuration information is not the same as the current master-slave state configuration information, the network device performs physical-layer auto-negotiation with the peer end network device according to the received master-slave state configuration information and sets the master-slave state configuration mode of the network device to the automatic mode. Moreover, the network devices on both ends perform no physical-layer auto-negotiation for the automatic mode setting.

If the network device judges that the received master-slave state configuration information is the same as the current master-slave state configuration information, the network device judges the current state of the port. If judging that the current state of the port is down, the network device performs physical-layer auto-negotiation with the peer end network device according to the received master-slave state configuration information, and sets the master-slave state configuration mode of the network device to the automatic mode. Moreover, the network devices on both ends perform no physical-layer auto-negotiation for the setting of the automatic mode. If judging that the current state of the port is up, the network device does not perform operations, such as the physical-layer auto-negotiation, and the automatic mode setting.

It can be seen from the above altered example of S 110 that, in the case that the master-slave state configuration information received by the network device is different from the current master-slave state configuration information, the network device performs physical-layer auto-negotiation with the peer end network device according to the received master-slave state configuration information and sets the master-slave state configuration mode of the network device to the automatic mode no matter whether the current state of the port of the network device is down or up. Moreover, the network devices on both ends perform no physical-layer auto-negotiation for the automatic mode setting.

Moreover, the network device may judge the current state of the port of the network device and judge whether the received master-slave state configuration information is the same as the current master-slave state configuration information simultaneously.

The current master-slave state configuration information of the network device may be stored as a text, a database, a table or a flag bit in the network device. The current master-slave state configuration information stored in the network device may indicate manual-Master or manual-Slave or null.

The master-slave state configuration information received by the network device is different from the current active-slave state configuration information in the following ways: The received master-slave state configuration information is manual-Master and the current master-slave state configuration information of the network device is manual-Slave or null; or, the received master-slave state configuration information is manual-Slave and the current master-slave state configuration information of the network device is manual-Master or null.

Besides, in Embodiment 1, the network device may receive the master-slave state configuration information in the process of normal communication between the network device and the peer end network device, or receive the master-slave state configuration information before normal communication between the network device and the peer end network device. That is, the operation specified in Embodiment 1 may be performed in the process of normal communication between the network device and the peer end network device, or before the normal communication between the network device and the peer end network device.

The master-slave state configuration information received by the network device may be input parameters of an interface function. In this case, the interface function makes the foregoing judgment, and instructs the network device to perform physical-layer auto-negotiation with the peer end network device. Moreover, the interface function performs operations, such as setting the master-slave state configuration mode of the network device to the automatic mode, and forbidding the network device to perform physical-layer auto-negotiation with the peer end network device for the automatic mode setting.

An example of the method for configuring the master and slave network devices through an interface function is: The network device receives the master-slave state configuration information, and the interface function makes a judgment; if determining that the current state of the port is down or the received master-slave state configuration information is different from the current master-slave state configuration information of the network device, the interface function instructs the network device, where the interface function is, to perform physical-layer auto-negotiation with the peer end network device according to the received master-slave state configuration information, namely, the interface function allows the network device, where the interface function is, to perform physical-layer auto-negotiation with the peer end network device; the interface function sets the master-slave state configuration mode of the network device, where the interface function is, to the automatic mode. Moreover, for the automatic mode setting, the interface function forbids the network device, where the interface function is, to perform physical-layer auto-negotiation with the peer end network device, that is, the interface function does not perform the operation of physical-layer auto-negotiation.

The interface function may forbid the physical-layer auto-negotiation in this way: The interface function does not output indication information for performing physical-layer auto-negotiation with the peer end network device; in this case, the network device performs no physical-layer auto-negotiation with the peer end network device because no such indication information is received. Of course, the interface function may forbid the physical-layer auto-negotiation in this way: The interface function outputs indication information for performing no physical-layer auto-negotiation with the peer end network device; in this case, the network device performs no physical-layer auto-negotiation with the peer end network device after receiving the indication information. The interface function may output information about negotiation success or negotiation failure according to the physical-layer auto-negotiation result.

It should be noted that the interface function may not perform the operation of the preceding judgment, but the judgment is performed by another unit or module in the network device. The unit or module for performing the judgment determines whether to provide the master-slave state configuration information received by the network device to the interface function according to the judgment result; the interface function instructs the network device to perform physical-layer auto-negotiation with the peer end network device according to the received master-slave state configuration information, and sets the master-slave state configuration mode of the network device to the automatic mode; and the interface function forbids the network device to perform physical-layer auto-negotiation with the peer end network device for the automatic mode setting.

It can be seen from the description of Embodiment 1, after receiving the master-slave state configuration information, the network device sets the master-slave state configuration mode of the network device to the automatic mode without performing physical-layer auto-negotiation with the peer end network device for the automatic mode setting. Therefore, the physical-layer auto-negotiation between the network devices on both ends can succeed without upper-layer information interaction. Moreover, the physical-layer auto-negotiation between the network devices on both ends can succeed if the master-slave state configuration information is reconfigured by only the network device on either end rather than the network devices on both ends. Therefore, reconfiguration of the master-slave state configuration information on the network devices on both ends and the upper-layer information interaction process after failure in the physical-layer auto-negotiation, and the phenomena that the master network device and the slave network device fail to switch can be avoided, and maintainability of the network devices can be improved.

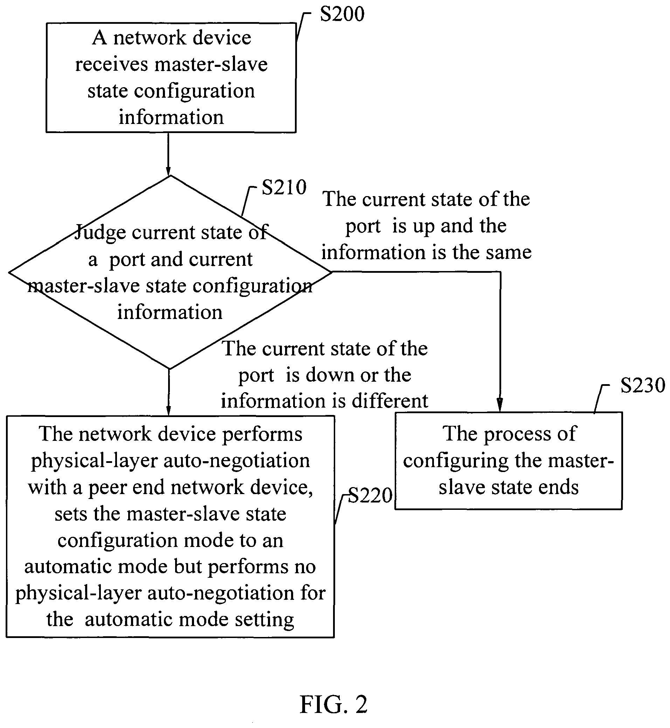

Embodiment 2 provides another method for configuring master and slave network devices. A flow chart of the method is shown in FIG. 2.

In FIG. 2, as S200, a network device receives master-slave state configuration information. The master-slave state configuration information is manual-Master or manual-Slave. The network device may be a network device that supports the synchronous Ethernet.

S210. The network device judges the current state of a port of the network device and/or judges whether the received master-slave state configuration information is the same as the current master-slave state configuration information. If the network device judges that the current state of the port of the network device is up and that the received master-slave state configuration information is the same as the current master-slave state configuration information, it is turned to S230; if the network device judges that the current state of the port of the network device is down and/or that the received master-slave state configuration information is different from the current master-slave state configuration information, it is turned to S220.

S220. The network device performs physical-layer auto-negotiation with a peer end network device according to the received master-slave state configuration information, and sets the master-slave state configuration mode of the network device to an automatic mode, but performs no physical-layer auto-negotiation with the peer end network device for the automatic mode setting.

S230. The network device neither performs physical-layer auto-negotiation with the peer end network device nor sets the master-slave state configuration mode of the network device to the automatic mode. The procedure of the method for configuring master and slave network devices ends.

It can be seen from the description of Embodiment 2, the network device sets the master-slave state configuration mode of the network device to the automatic mode without performing physical-layer auto-negotiation with the peer end network device. Therefore, the physical-layer auto-negotiation between the network devices on both ends can succeed without upper-layer information interaction. Therefore, reconfiguration of the master-slave state configuration information on the network devices on both ends and the upper-layer information interaction process after failure in the physical-layer auto-negotiation, and the phenomena that the master network device and the slave network device fail to switch can be avoided, and maintainability of the network devices can be improved.

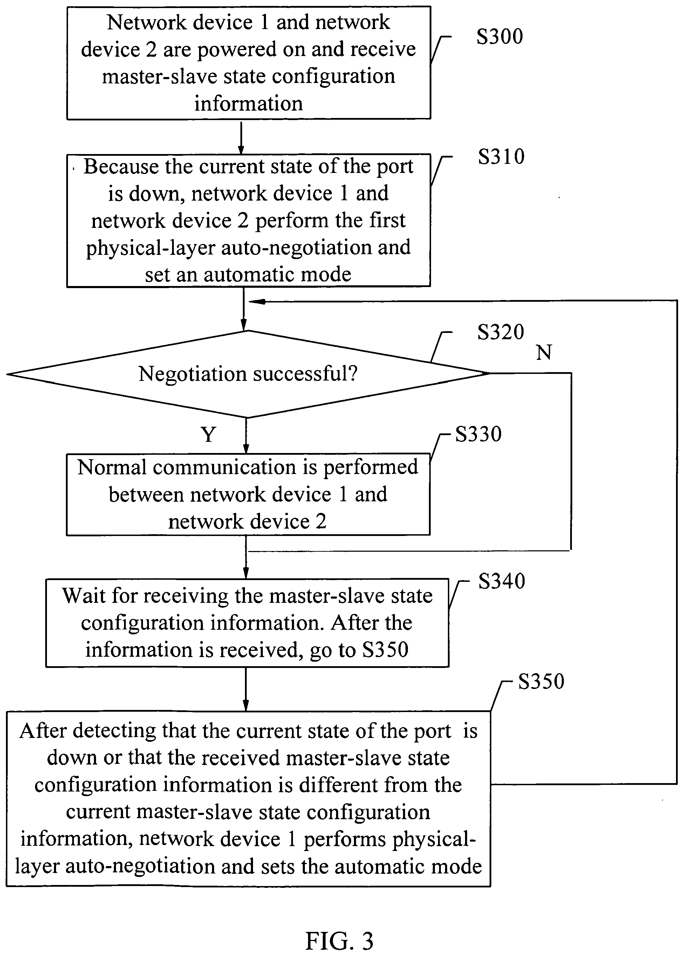

Embodiment 3 provides another method for configuring master and slave network devices. A flow chart of the method is shown in FIG. 3.

In FIG. 3, as S300, before normal communication between network device 1 and network device 2, network device 1 and network device 2 perform master-slave state configuration, and both network device 1 and network device 2 receive the master-slave state configuration information. It can be understood that network device 1 and network device 2 are powered on, thus the current state of a port of network device 1 is down and the current state of a port of network device 2 is down. It is turned to S310.

S310. After receiving the master-slave state configuration information, both network device 1 and network device 2 detect that the current state of the port is down. Therefore, the first physical-layer auto-negotiation is performed between network device 1 and network device 2, network device 1 set its master-slave state configuration mode to an automatic mode and network device 2 set its master-slave state configuration mode to an automatic mode. The first physical-layer auto-negotiation is performed not for the automatic mode setting, but is performed for the received master-slave state configuration information. It is turned to S320.

S320. Both network device 1 and network device 2 judge whether the physical-layer auto-negotiation succeeds. If the negotiation succeeds, the current state of the port of the network devices on both ends is up, and it is turned to S330; if the negotiation fails, the current state of the port of the network devices on both ends is down, and it is turned to S340.

In this embodiment, if the master-slave state configuration information received by network device 1 is manual-Slave, and the master-slave state configuration information received by network device 2 is manual-Master, the first physical-layer auto-negotiation between network device 1 and network device 2 succeeds. If the master-slave state configuration information received by network devices on both ends is manual-Master or manual-Slave, the first physical-layer auto-negotiation between network device 1 and network device 2 fails.

S330. Network device 1 is a slave network device, and network device 2 is a master network device. Network device 1 and network device 2 may communicate with each other normally. It is turned to S340.

S340. Network device 1 and network device 2 wait for the next configuration. That is, network device 1 and network device 2 waits for receiving the master-slave state configuration information again. Either network device 1 or network device 2 can perform reconfiguration. When either of them performs reconfiguration (namely, either of them receives the master-slave state configuration information again), it is turned to S350. In Embodiment 3, it is assumed that network device 1 performs reconfiguration, and master-slave state configuration information received by network device 1 again is manual-Master.

It should be noted that if the first physical-layer auto-negotiation succeeds, the reconfiguration performed by network device 1 leads to switch between the master network device and the slave network device (namely, switch between the master state and the slave state of the network devices). If the first physical-layer auto-negotiation fails, the reconfiguration performed by network device 1 makes network device 1 reattempt to perform the normal communication with network device 2. In S350 below and S320, it is assumed that network device 1 performs reconfiguration, and reconfiguration by network device 2 is similar to the scenario in which network device 1 performs reconfiguration and therefore is not described in detail.

S350. After network device 1 performs the reconfiguration, if it is detected that the current state of the port of network device 1 is down, or it is detected that the master-slave state configuration information received again is different from the current master-slave state configuration information of network device 1, network device 1 sets its master-slave state configuration mode to an automatic mode, and performs a second physical-layer auto-negotiation with network device 2 for the reconfiguration, but performs no physical-layer auto-negotiation with network device 2 for the automatic mode setting after the reconfiguration. It is turned to S320.

In the process of the above reconfiguration performed by network device 1, because the master-slave state configuration mode of network device 2 is set to an automatic mode in S310, network device 2 sets the master-slave state configuration information of network device 2 to manual-Slave according to the master-slave state configuration information configured by network device 1. Therefore, the second physical-layer auto-negotiation succeeds, network device 1 is a master network device, network device 2 is a slave network device, the current state of the port of the network devices on both ends is up, and normal communication is realized between network device 1 and network device 2.

It can be seen from the description of Embodiment 3, before communicating normally and after receiving the master-slave state configuration information, both network device 1 and network device 2 set the master-slave state configuration mode to an automatic mode without performing physical-layer auto-negotiation with the peer end network device. Therefore, the physical-layer auto-negotiation between network device 1 and network device 2 can succeed without upper-layer information interaction no matter whether the first physical-layer auto-negotiation succeeds or fails. Moreover, the physical-layer auto-negotiation between the network devices on both ends can succeed if the master-slave state configuration information is reconfigured by only the network device on either end rather than the network devices on both ends. Therefore, reconfiguration of the master-slave state configuration information on network device 1 and network device 2 and the upper-layer information interaction process after failure in the first physical-layer auto-negotiation, and the phenomena that the master network device and the slave network device fail to switch can be avoided, and maintainability of the network devices can be improved.

Embodiment 4 provides an apparatus for configuring master and slave network devices.

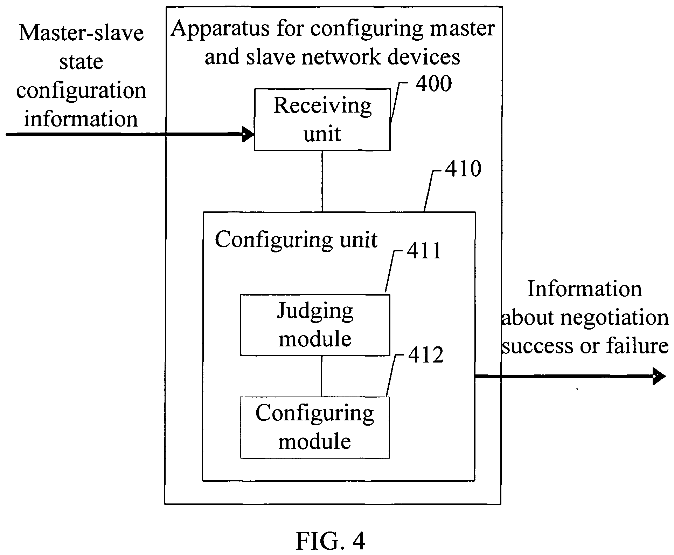

In the embodiments of the present invention, the apparatus may be an independent network device, for example, a network device that supports the synchronous Ethernet, or a component set in a network device, for example, a chip or printed circuit board in the network device. In Embodiment 4, take the apparatus is a component set in the network device as an example. FIG. 4 shows a structure of the apparatus.

The apparatus shown in FIG. 4 includes a receiving unit 400 and a configuring unit 410.

The receiving unit 400 is configured to receive master-slave state configuration information. In this embodiment, the master-slave state configuration information received by the receiving unit 400 indicates manual-Master or manual-Slave. The receiving unit 400 may receive the master-slave state configuration information in the process of normal communication of the network device, or receive the master-slave state configuration information before normal communication of the network device.

The configuring unit 410 is configured to perform physical-layer auto-negotiation with the peer end network device according to the master-slave state configuration information received by the receiving unit 400, and set the master-slave state configuration mode of the network device to an automatic mode. In this embodiment, the configuring unit 410 performs no physical-layer auto-negotiation with the peer end network device for the automatic mode setting.

Optionally, after the receiving unit 400 receives the master-slave state configuration information, the configuring unit 410 does not perform physical-layer auto-negotiation or automatic mode setting directly, but judges the current state of a port of the network device and/or judges whether the received master-slave state configuration information is the same as the current master-slave state configuration information, and then determines whether to perform the physical-layer auto-negotiation or automatic mode setting according to a judgment result. Of course, after the receiving unit 400 receives the master-slave state configuration information, the configuring unit 410 may not judge the current state of the port and not judge whether the received master-slave state configuration information is the same as the current master-slave state configuration information, but directly performs operations, such as the physical-layer auto-negotiation, and the automatic mode setting.

Optionally, the configuring unit 410 may output information about negotiation success or negotiation failure according to a result of negotiation with the peer end network device.

Optionally, the configuring unit 410 may further include a judging module 411 and a configuring module 412.

The judging module 411 is configured to judge whether the current state of the port of the network device where the judging module 411 is located is down or up and/or whether the received master-slave state configuration information is different from the current master-slave state configuration information of the network device after the receiving unit 400 receives the master-slave state configuration information.

In this embodiment, the judging module 411 may judge the current state of the port of the network device first, and then judge whether the master-slave state configuration information received by the receiving unit 400 is the same as the current master-slave state configuration information.

If the judging module 411 determines that the current state of the port is down, the configuring module 412 is configured to perform physical-layer auto-negotiation with the peer end network device according to the master-slave state configuration information received by the receiving unit 400, set the master-slave state configuration mode of the network device where the configuring module 412 is located to the automatic mode, and forbid the network device where the judging module 411 is located to perform physical-layer auto-negotiation with the peer end network device for the automatic mode setting.

If the judging module 411 determines that the current state of the port is up, the judging module 411 is configured to judge whether the master-slave state configuration information received by the receiving unit 400 is the same as the current master-slave state configuration information of the network device.

If the judgment result of the judging module 411 is that the received master-slave state configuration information is different from the current master-slave state configuration information, the configuring module 412 is configured to perform physical-layer auto-negotiation with the peer end network device according to the master-slave state configuration information received by the receiving unit 400, set the master-slave state configuration mode of the network device where the configuring module 412 is located to the automatic mode, and forbid the network device where the configuring module 412 is located to perform physical-layer auto-negotiation with the peer end network device for the automatic mode setting.

If the judgment result of the judging module 411 is that the received master-slave state configuration information is the same as the current master-slave state configuration information, the configuring module 412 performs neither the physical-layer auto-negotiation nor the automatic mode setting.

It should be noted that the judging module 411 may also judge whether the master-slave state configuration information received by the receiving unit 400 is the same as the current master-slave state configuration information first, and then judge the current state of the port of the network device. The judging module 411 may make the two judgments simultaneously either. The details are given in the method embodiment above.

As described above, if the judgment result of the judging module 411 is that the current state of the port is down or that the received master-slave state configuration information is different from the current master-slave state configuration information of the network device, the configuring module 412 performs physical-layer auto-negotiation according to the master-slave state configuration information received by the receiving unit 400, sets the master-slave state configuration mode of the network device to the automatic mode, and performs no physical-layer auto-negotiation for the automatic mode setting.

The current master-slave state configuration information of the network device may be stored as a text, a database, a table or a flag bit in the network device, for example, in the configuring unit 410, or in another module or unit. The current master-slave state configuration information stored in the network device indicates manual-Master or manual-Slave or null.

The configuring unit 410 may include an interface function. The interface function is described in the method embodiment above.

It can be seen from the description of Embodiment 4 that, after the network device receives the master-slave state configuration information, the configuring unit 410 sets the master-slave state configuration mode of the network device to the automatic mode without performing physical-layer auto-negotiation with the peer end network device. Therefore, the physical-layer auto-negotiation between the network devices on both ends can succeed without upper-layer information interaction. Moreover, the physical-layer auto-negotiation between the network devices on both ends can succeed if the master-slave state configuration information is reconfigured by only the network device on either end rather than the network devices on both ends. Therefore, reconfiguration of the master-slave state configuration information on network device 1 and network device 2 and the upper-layer information interaction process after failure in the first physical-layer auto-negotiation, and the phenomena that the master network device and the slave network device fail to switch can be avoided, and maintainability of the network devices can be improved.

Embodiment 5 provides a network device.

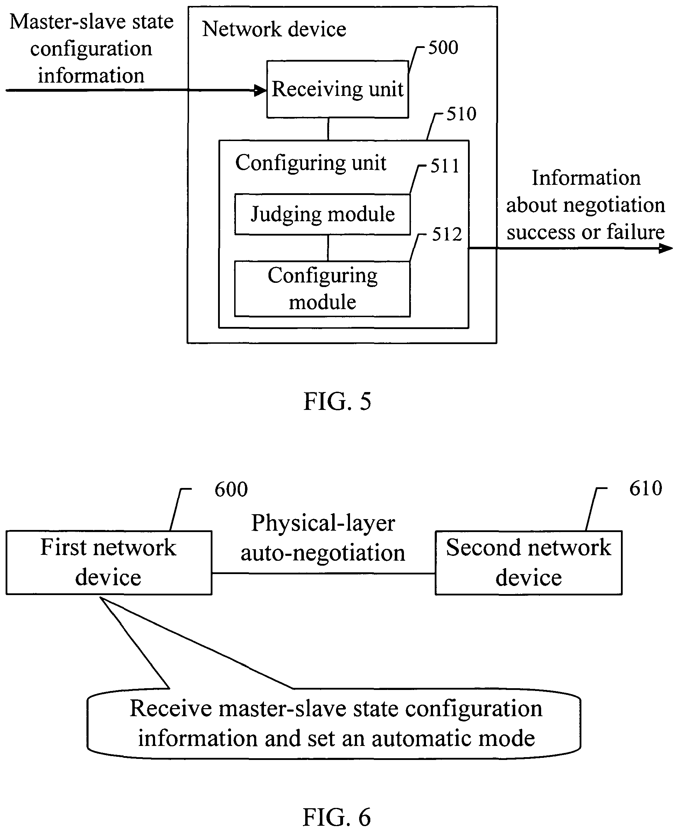

In Embodiment 5, take the apparatus for configuring master and slave network devices is a network device for an example. The network device may be a network device that supports the synchronous Ethernet, for example, a network device that includes a PHY chip of 1000BASE-T. A structure of the network device is shown in FIG. 5.

The network device shown in FIG. 5 includes a receiving unit 500 and a configuring unit 510. The configuring unit 510 may include a judging module 511 and a configuring module 512.

The receiving unit 500 receives the master-slave state configuration information input from the outside. The master-slave state configuration information received by the receiving unit 500 indicates manual-Master or manual-Slave. The receiving unit 500 may receive the master-slave state configuration information in the process of normal communication between the network device that includes the receiving unit 500 and the peer end network device, or receive the master-slave state configuration information before the normal communication between the network device that includes the receiving unit 500 and the peer end network device.

The configuring unit 510 performs physical-layer auto-negotiation with the peer end network device according to the master-slave state configuration information received by the receiving unit 500, and sets the master-slave state configuration mode to an automatic mode. In the prior art, if the master-slave state configuration mode is set to an automatic mode, the network devices on both ends perform physical-layer auto-negotiation for the automatic mode setting. In this embodiment, the configuring unit 510 performs no physical-layer auto-negotiation with the peer end network device for the automatic mode setting.

The configuring unit 510 may not perform physical-layer auto-negotiation or automatic mode setting directly after the receiving unit 500 receives the master-slave state configuration information, but judge the current state of a port of the network device and/or judge whether the received master-slave state configuration information is the same as the current master-slave state configuration information, and then perform the physical-layer auto-negotiation and the automatic mode setting if the judgment result complies with presetting. Of course, the configuring unit 510 may not judge the current state of the port and/or not judge whether the received master-slave state configuration information is the same as the current master-slave state configuration information after the receiving unit 500 receives the master-slave state configuration information, but performs the physical-layer auto-negotiation and the automatic mode setting directly. The configuring unit 510 may output information about negotiation success or negotiation failure according to the result of negotiation with the peer end network device.

The operations performed by the configuring unit 510, the judging module 511, and the configuring module 512 are described in the fourth embodiment above.

Embodiment 6 provides a system for configuring master and slave network devices, as shown in FIG. 6.

The system shown in FIG. 6 includes a first network device 600 and a second network device 610. Although FIG. 6 shows only two network devices, the system may include more than two network devices.

The first network device 600 and the second network device 610 may be network devices that support the synchronous Ethernet. For example, the first network device 600 and the second network device 610 may be network devices that include a PHY chip of 1000BASE-T.

The first network device 600 performs physical-layer auto-negotiation with the second network device 610 on the peer end according to received master-slave state configuration information after receiving the master-slave state configuration information, and sets the master-slave state configuration mode of the first network device 600 to an automatic mode but performs no physical-layer auto-negotiation with the second network device 610 for the automatic mode setting.

The second network device 610 is a peer end network device of the first network device 600, and performs physical-layer auto-negotiation with the first network device 600 after the first network device 600 initiates the physical-layer auto-negotiation.

The structures of the first network device 600 and the second network device 610 are described in Embodiment 5.

In order to describe the embodiments of the present invention more clearly, the following gives several scenarios of configuring master and slave network devices, taking network device A and network device B as examples.

### Scenario 1

In this scenario, the state of ports of network device A and network device B are down. The state of the ports of both network device A and network device B is down for many reasons such as: Both network device A and network device B are configured to manual-Master or manual-Slave. In this case, the physical-layer auto-negotiation between network device A and network device B fails, and therefore, the state of the ports of both network device A and network device B is down. Another reason that makes the state of the ports of both network device A and network device B be down is: After the devices are powered on and before network device A communicates with network device B, the state of the ports of both network device A and network device B is down.

In this scenario, it is assumed that network device B receives the master-slave state configuration information. For ease of description, network device B in this scenario does not judge the current state of the port and whether the received master-slave state configuration information is the same as the current master-slave state configuration information after receiving the master-slave state configuration information.

Network device B performs physical-layer auto-negotiation with the peer end network device (namely, network device B performs physical-layer auto-negotiation with network device A) according to the received master-slave state configuration information, and sets the master-slave state configuration mode of network device B to an automatic mode. According to the description in embodiments of the present invention, network device B performs no physical-layer auto-negotiation with network device A for the automatic mode setting.

Because the master-slave state configuration mode of network device B is the automatic mode, network device B performs the physical-layer auto-negotiation with network device A according to the master-slave state configuration requirement of network device A. The physical-layer auto-negotiation succeeds, thus the state of the ports of both network device B and network device A is up.

### Scenario 2

While network device A communicates with network device B normally, the master-slave state configuration mode of the network devices on both ends is still the automatic mode. In this case, if network device A receives the master-slave state configuration information different from the current master-slave state configuration information, namely, the current master-slave state configuration information of network device A changes, network device A performs physical-layer auto-negotiation with network device B according to received master-slave state configuration information. In this case, because the master-slave state configuration mode of network device B is the automatic mode, network device B performs the physical-layer auto-negotiation with network device A according to the master-slave state configuration requirement of network device A. The physical-layer auto-negotiation succeeds, thus the master-slave state of the network devices on both ends switches, the state of the ports of the network devices on both ends is up, and the network devices on both ends can keep communicating normally.

After reading the foregoing embodiments, those skilled in the art are clearly aware that the embodiments of the present invention may be implemented through hardware, or, preferably in most circumstances, through software in addition to a necessary universal hardware platform. Therefore, the contributions made by the technical solution under the present invention to the prior art may be partially or completely embodied as a software product. The software product may be stored in a storage medium such as read-only memory (ROM)/ random access memory (RAM), magnetic disk, or compact disk-read only memory (CD-ROM), and incorporates several instructions for instructing a computer device (for example, personal computer, server, or network device) to execute the method specified in each embodiment of the present invention or a part of the embodiment.

Although the invention has been described through several exemplary embodiments, it is apparent that those skilled in the art can make modifications and variations to the invention. The invention is intended to cover the modifications and variations.

## Claims

1. A method for configuring master and slave network devices, wherein the master network device uses a local clock to send data and the slave network device uses the clock recovered to send data and the master and slave devices both support synchronous Ethernet, comprising:
receiving, by a network device, master-slave state configuration information indicating that the network device is set to manual-Master or manual-Slave;
judging, by the network device, if a current state of a port of the network device is down or up and/or whether the received master-slave state configuration information is the same as current master-slave state configuration information of the network device after receiving the master-slave state configuration information;
and in case of judging whether the port of the network device is down or up, if the current state of the port is down, performing a first physical-layer auto-negotiation according to the received master-slave state configuration information, and setting a master-slave state configuration mode of the network device to an automatic mode, but performing no physical-layer auto-negotiation for the automatic mode setting;
and in case of judging whether the received master-slave state configuration information is the same as current master-slave state configuration of the network device, if the received master-slave state configuration information is different from the current master-slave state configuration information of the network device, performing the first physical-layer auto-negotiation according to the received master-slave state configuration information, and setting the master-slave state configuration mode of the network device to the automatic mode but performing no physical-layer auto-negotiation for the automatic mode setting.

2. The method according to claim 1, further comprising:
performing, by the network device, which is in the automatic mode, a second physical-layer auto-negotiation with a peer end network device when the peer end network device initiates the second physical-layer auto-negotiation according to configured master-slave state configuration information.

3. An apparatus for configuring master and slave network devices, wherein the apparatus is a network device that supports a synchronous Ethernet, or is set in the network device that supports the synchronous Ethernet and the master network device uses a local clock to send data and the slave network device uses the clock recovered to send data, the apparatus comprising:
a receiving unit, configured to receive master-slave state configuration information indicating that the network device is set to manual-Master or manual-Slave; and
a configuring unit, configured to perform a first physical-layer auto-negotiation according to the master-slave state configuration information received by the receiving unit, and set a master-slave state configuration mode of the network device to an automatic mode but perform no physical-layer auto-negotiation for the automatic mode setting,
wherein the configuring unit comprises:
a judging module, configured to judge current state of a port of the network device is down or up and/or whether the received master-slave state configuration information is the same as current master-slave state configuration information of the network device after the receiving unit receives the master-slave state configuration information; and
a configuring module, configured to perform the first physical-layer auto-negotiation according to the master-slave state configuration information received by the receiving unit if a judgment result of the judging module is that the current state of the port is down and/or that the received master-slave state configuration information is different from the current master-slave state configuration information of the network device; and set the master-slave state configuration mode of the network device to the automatic mode but perform no physical-layer auto-negotiation for the automatic mode setting.

4. The apparatus according to claim 3, wherein:
the configuring unit, which is in the network device, performs a second physical-layer auto-negotiation with a peer end network device when the peer end network device initiates the second physical-layer auto-negotiation according to configured master-slave state configuration information; wherein the network device is in the automatic mode.

5. A system for configuring master and slave network devices, wherein the master network device uses a local clock to send data and the slave network device uses the clock recovered to send data and the master and slave devices both support synchronous Ethernet, comprising multiple network devices, wherein:
a first network device, configured to perform a physical-layer auto-negotiation according to received master-slave state configuration information indicating that the first network device is set to manual-Master or manual-Slave after receiving the master-slave state configuration information, and set a master-slave state configuration mode of the first network device to an automatic mode but perform no physical-layer auto-negotiation for the automatic mode setting; and
a second network device, configured to perform the physical-layer auto-negotiation with the first network device after the first network device initiates the physical-layer auto-negotiation, wherein:
the first network device is further configured to judge current state of a port of the first network device is down or up and/or whether the received master-slave state configuration information is the same as current master-slave state configuration information of the network device after receiving the master-slave state configuration information; perform the physical-layer auto-negotiation according to the received master-slave state configuration information if a judgment result is that the current state of the port is down and/or that the received master-slave state configuration information is different from the current master-slave state configuration information of the first network device; and set the master-slave state configuration mode of the first network device to the automatic mode but perform no physical-layer auto-negotiation for the automatic mode setting.

## Patentansprüche

1. Verfahren zum Konfigurieren von Master- und Slave-Netzwerkgeräten, wobei das Master-Netzwerkgerät einen lokalen Takt zum Senden von Daten verwendet und das Slave-Netzwerkgerät den wiederhergestellten Takt zum Senden von Daten verwendet und sowohl das Master- als auch das Slave-Gerät synchrones Ethernet verwenden, wobei das Verfahren die folgenden Schritte umfasst:
Empfangen, durch ein Netzwerkgerät, von Master-Slave-Zustandskonfigurationsinformationen, die anzeigen, dass das Netzwerkgerät auf Manuell-Master oder Manuell-Slave eingestellt ist;
Beurteilen, durch das Netzwerkgerät, ob ein aktueller Zustand eines Ports des Netzwerkgeräts Außer-Betrieb oder In-Betrieb ist und/oder ob die empfangenen Master-Slave-Zustandskonfigurationsinformationen dieselben sind wie die aktuellen Master-Slave-Zustandskonfigurationsinformationen des Netzwerkgeräts, nachdem die Master-Slave-Zustandskonfigurationsinformationen empfangen wurden;
und im Falle des Beurteilens, ob der Port des Netzwerkgeräts Außer-Betrieb oder In-Betrieb ist, wenn der aktuelle Zustand des Ports Außer-Betrieb ist, Durchführen einer ersten Auto-Negotiation in der Bitübertragungsschicht gemäß den empfangenen Master-Slave-Zustandskonfigurationsinformationen und Einstellen eines Master-Slave-Zustandskonfigurationsmodus des Netzwerkgeräts auf einen Automatikmodus, aber Nichtdurchführen einer Auto-Negotiation in der Bitübertragungsschicht für die Automatikmoduseinstellung;
und im Falle des Beurteilens, ob die empfangenen Master-Slave-Zustandskonfigurationsinformationen dieselben sind wie die aktuelle Master-Slave-Zustandskonfiguration des Netzwerkgeräts, wenn sich die empfangenen Master-Slave-Zustandskonfigurationsinformationen von den aktuellen Master-Slave-Zustandskonfigurationsinformationen des Netzwerkgeräts unterscheiden, Durchführen der ersten Auto-Negotiation in der Bitübertragungsschicht gemäß den empfangenen Master-Slave-Zustandskonfigurationsinformationen und Einstellen des Master-Slave-Zustandskonfigurationsmodus des Netzwerkgeräts auf den Automatikmodus, aber Nichtdurchführen einer Auto-Negotiation in der Bitübertragungsschicht für die Automatikmoduseinstellung.

2. Verfahren nach Anspruch 1, das ferner den folgenden Schritt umfasst:
Durchführen, durch das Netzwerkgerät, das sich im Automatikmodus befindet, einer zweiten Auto-Negotiation in der Bitübertragungsschicht mit einem Peer-Endnetzwerkgerät, wenn das Peer-Endnetzwerkgerät die zweite Auto-Negotiation in der Bitübertragungsschicht gemäß konfigurierten Master-Slave-Zustandskonfigurationsinformationen initiiert.

3. Vorrichtung zum Konfigurieren von Master- und Slave-Netzwerkgeräten, wobei die Vorrichtung ein Netzwerkgerät ist, das ein synchrones Ethernet unterstützt, oder in dem Netzwerkgerät, das das synchrone Ethernet unterstützt, eingestellt ist und das Master-Netzwerkgerät einen lokalen Takt zum Senden von Daten verwendet und das Slave-Netzwerkgerät den wiederhergestellten Takt zum Senden von Daten verwendet, wobei die Vorrichtung Folgendes umfasst:
eine Empfangseinheit, die ausgelegt ist zum Empfangen von Master-Slave-Zustandskonfigurationsinformationen, die anzeigen, dass das Netzwerkgerät auf Manuell-Master oder Manuell-Slave eingestellt ist; und
eine Konfigurationseinheit, die ausgelegt ist zum Durchführen einer ersten Auto-Negotiation in der Bitübertragungsschicht gemäß den von der Empfangseinheit empfangenen Master-Slave-Zustandskonfigurationsinformationen und zum Einstellen eines Master-Slave-Zustandskonfigurationsmodus des Netzwerkgeräts auf einen Automatikmodus, aber Nichtdurchführen einer Auto-Negotiation in der Bitübertragungsschicht für die Automatikmoduseinstellung,
wobei die Konfigurationseinheit Folgendes umfasst:
ein Beurteilungsmodul, das ausgelegt ist zum Beurteilen eines aktuellen Zustands eines Ports des Netzwerkgeräts als Außer-Betrieb oder In-Betrieb und/oder, ob die empfangenen Master-Slave-Zustandskonfigurationsinformationen dieselben sind wie die aktuellen Master-Slave-Zustandskonfigurationsinformationen des Netzwerkgeräts, nachdem die Empfangseinheit die Master-Slave-Zustandskonfigurationsinformationen empfangen hat; und ein Konfigurationsmodul, das ausgelegt ist zum Durchführen der Auto-Negotiation in der Bitübertragungsschicht gemäß den von der Empfangseinheit empfangenen Master-Slave-Zustandskonfigurationsinformationen, wenn ein Beurteilungsergebnis des Beurteilungsmoduls ist, dass der aktuelle Zustand des Ports Außer-Betrieb ist und/oder dass sich die empfangenen Master-Slave-Zustandskonfigurationsinformationen von den aktuellen Master-Slave-Zustandskonfigurationsinformationen des Netzwerkgeräts unterscheiden; und Einstellen des Master-Slave-Zustandskonfigurationsmodus des Netzwerkgeräts auf den Automatikmodus, aber Nichtdurchführen einer Auto-Negotiation in der Bitübertragungsschicht für die Automatikmoduseinstellung.

4. Vorrichtung nach Anspruch 3, wobei:
die Konfigurationseinheit, die sich in dem Netzwerkgerät befindet, eine zweite Auto-Negotiation in der Bitübertragungsschicht mit einem Peer-Endnetzwerkgerät durchführt, wenn das Peer-Endnetzwerkgerät die zweite Auto-Negotiation in der Bitübertragungsschicht gemäß konfigurierten Master-Slave-Zustandskonfigurationsinformationen initiiert; wobei sich das Netzwerkgerät im Automatikmodus befindet.

5. System zum Konfigurieren von Master- und Slave-Netzwerkgeräten, wobei das Master-Netzwerkgerät einen lokalen Takt zum Senden von Daten verwendet und das Slave-Netzwerkgerät den wiederhergestellten Takt zum Senden von Daten verwendet und sowohl das Master- als auch das Slave-Gerät synchrones Ethernet unterstützen, umfassend mehrere Netzwerkgeräte, wobei:
ein erstes Netzwerkgerät ausgelegt ist zum Durchführen einer Auto-Negotiation in der Bitübertragungsschicht gemäß den empfangenen Master-Slave-Zustandskonfigurationsinformationen, die anzeigen, dass das erste Netzwerkgerät, nach dem Empfangen der Master-Slave-Zustandskonfigurationsinformationen, auf Manuell-Master oder Manuell-Slave eingestellt ist; und zum Einstellen eines Master-Slave-Zustandskonfigurationsmodus des ersten Netzwerkgeräts auf einen Automatikmodus, aber Nichtdurchführen einer Auto-Negotiation in der Bitübertragungsschicht für die Automatikmoduseinstellung; und
ein zweites Netzwerkgerät, das ausgelegt ist zum Durchführen der Auto-Negotiation in der Bitübertragungsschicht mit dem ersten Netzwerkgerät, nachdem das erste Netzwerkgerät die Auto-Negotiation in der Bitübertragungsschicht initiiert hat, wobei: das erste Netzwerkgerät ferner ausgelegt ist zum Beurteilen eines aktuellen Zustands eines Ports des ersten Netzwerkgeräts als Außer-Betrieb oder In-Betrieb und/oder, ob die empfangenen Master-Slave-Zustandskonfigurationsinformationen dieselben sind wie die aktuellen Master-Slave-Zustandskonfigurationsinformationen des Netzwerkgeräts, nachdem die Master-Slave-Zustandskonfigurationsinformationen empfangen wurden; zum Durchführen der Auto-Negotiation in der Bitübertragungsschicht gemäß den empfangenen Master-Slave-Zustandskonfigurationsinformationen, wenn ein Beurteilungsergebnis ist, dass der aktuelle Zustand des Ports Außer-Betrieb ist und/oder dass sich die empfangenen Master-Slave-Zustandskonfigurationsinformationen von den aktuellen Master-Slave-Zustandskonfigurationsinformationen des ersten Netzwerkgeräts unterscheiden; und Einstellen des Master-Slave-Zustandskonfigurationsmodus des ersten Netzwerkgeräts auf den Automatikmodus, aber Nichtdurchführen einer Auto-Negotiation in der Bitübertragungsschicht für die Automatikmoduseinstellung.

## Revendications

1. Procédé permettant de configurer des dispositifs de réseau esclave et maître, dans lequel le dispositif de réseau maître utilise une horloge locale pour envoyer des données et le dispositif de réseau esclave utilise l'horloge récupérée pour envoyer des données, et les dispositifs esclave et maître prennent tous les deux en charge l'Ethernet synchrone, comprenant les étapes consistant à :
recevoir, par un dispositif de réseau, des informations de configuration d'état esclave-maître indiquant que le dispositif de réseau est réglé sur maître-manuel ou esclave-manuel ;
juger, par le dispositif de réseau, si un état actuel d'un port du dispositif de réseau est abaissé ou ascendant et/ou si les informations de configuration d'état esclave-maître reçues sont les mêmes que les informations de configuration d'état esclave-maître actuelles du dispositif de réseau après réception des informations de configuration d'état esclave-maître ;
et en cas de jugement déterminant si le port du dispositif de réseau est abaissé ou ascendant, si l'état actuel du port est abaissé, exécuter une première auto-négociation de couche physique en fonction des informations de configuration d'état esclave-maître reçues, et régler un mode de configuration d'état esclave-maître du dispositif de réseau sur un mode automatique, mais n'exécuter aucune auto-négociation de couche physique pour le réglage de mode automatique ;
et en cas de jugement déterminant si les informations de configuration d'état esclave-maître reçues sont les mêmes que la configuration d'état esclave-maître actuelle du dispositif de réseau, si les informations de configuration d'état esclave-maître reçues sont différentes des informations de configuration d'état esclave-maître actuelles du dispositif de réseau, exécuter la première auto-négociation de couche physique en fonction des informations de configuration d'état esclave-maître reçues, et régler le mode de configuration d'état esclave-maître du dispositif de réseau sur le mode automatique, mais n'exécuter aucune auto-négociation de couche physique pour le réglage de mode automatique.

2. Procédé selon la revendication 1, consistant en outre à :
exécuter, par le dispositif de réseau, qui est dans le mode automatique, une seconde auto-négociation de couche physique avec un dispositif de réseau d'extrémité homologue lorsque le dispositif de réseau d'extrémité homologue initie la seconde auto-négociation de couche physique en fonction des informations de configuration d'état esclave-maître configurées.

3. Appareil permettant de configurer des dispositifs de réseau esclave et maître, dans lequel l'appareil est un dispositif de réseau qui prend en charge un Ethernet synchrone, ou est réglé dans le dispositif de réseau qui prend en charge l'Ethernet synchrone, et le dispositif de réseau maître utilise une horloge locale pour envoyer des données et le dispositif de réseau esclave utilise l'horloge récupérée pour envoyer des données, l'appareil comprenant :
une unité de réception, conçue pour recevoir des informations de configuration d'état esclave-maître indiquant que le dispositif de réseau est réglé sur maître-manuel ou esclave-manuel ; et
une unité de configuration, conçue pour exécuter une première auto-négociation de couche physique en fonction des informations de configuration d'état esclave-maître reçues par l'unité de réception, et régler un mode de configuration d'état esclave-maître du dispositif de réseau sur un mode automatique, mais n'exécuter aucune auto-négociation de couche physique pour le réglage de mode automatique ;
dans lequel l'unité de configuration comprend :
un module de jugement, conçu pour juger si un état actuel d'un port du dispositif de réseau est abaissé ou ascendant et/ou si les informations de configuration d'état esclave-maître reçues sont les mêmes que les informations de configuration d'état esclave-maître actuelles du dispositif de réseau après que l'unité de réception a reçu les informations de configuration d'état esclave-maître ; et
un module de configuration, conçu pour exécuter la première auto-négociation de couche physique en fonction des informations de configuration d'état esclave-maître reçues par l'unité de réception si un résultat de jugement du module de jugement est que l'état actuel du port est abaissé et/ou que les informations de configuration d'état esclave-maître reçues sont différentes des informations de configuration d'état esclave-maître actuelles du dispositif de réseau ; et régler le mode de configuration d'état esclave-maître du dispositif de réseau sur le mode automatique, mais n'exécuter aucune auto-négociation de couche physique pour le réglage de mode automatique.

4. Appareil selon la revendication 3, dans lequel :
l'unité de configuration, qui est dans le dispositif de réseau, exécute une seconde auto-négociation de couche physique avec un dispositif de réseau d'extrémité homologue lorsque le dispositif de réseau d'extrémité homologue initie la seconde auto-négociation de couche physique en fonction d'informations de configuration d'état esclave-maître configurées ; dans lequel le dispositif de réseau se trouve dans le mode automatique.

5. Système de configuration de dispositifs de réseau esclave et maître, dans lequel le dispositif de réseau maître utilise une horloge locale pour envoyer des données et le dispositif de réseau esclave utilise l'horloge récupérée pour envoyer des données, et les dispositifs esclave et maître prennent tous les deux en charge l'Ethernet synchrone, comprenant de multiples dispositifs de réseau, dans lequel :
un premier dispositif de réseau, conçu pour exécuter une auto-négociation de couche physique en fonction d'informations de configuration d'état esclave-maître reçues indiquant que le premier dispositif de réseau est réglé sur maître-manuel ou esclave-manuel après réception des informations de configuration d'état esclave-maître, et régler un mode de configuration d'état esclave-maître du premier dispositif de réseau sur un mode automatique, mais n'exécuter aucune auto-négociation de couche physique pour le réglage de mode automatique ; et
un second dispositif de réseau, conçu pour exécuter l'auto-négociation de couche physique avec le premier dispositif de réseau après que le premier dispositif de réseau initie l'auto-négociation de couche physique, dans lequel :
le premier dispositif de réseau est conçu en outre pour juger si l'état actuel d'un port du premier dispositif de réseau est abaissé ou ascendant et/ou si les informations de configuration d'état esclave-maître reçues sont les mêmes que les informations de configuration d'état esclave-maître actuelles du dispositif de réseau après réception des informations de configuration d'état esclave-maître ; exécuter l'auto-négociation de couche physique en fonction des informations de configuration d'état esclave-maître reçues si un résultat de jugement est que l'état actuel du port est abaissé et/ou que les informations de configuration d'état esclave-maître reçues sont différentes des informations de configuration d'état esclave-maître actuelles du premier dispositif de réseau ; et régler le mode de configuration d'état esclave-maître du premier dispositif de réseau sur le mode automatique, mais n'exécuter aucune auto-négociation de couche physique pour le réglage de mode automatique.
